# FASCICULE DE BREVET EUROPEEN

(11) **EP 3 462 072 B1**
(45) Date de publication et mention de la délivrance du brevet: **10.11.2021**
(21) Numéro de dépôt: 18197294.4
(22) Date de dépôt: 27.09.2018
(51) Int. Cl.: F16L 41/00, F16L 5/10, F16L 17/03, F16L 41/08

(54) **DISPOSITIF DE JONCTION D'UN TUYAU ET D'UN REGARD**
VERBINDUNGSVORRICHTUNG EINES ROHRS UND EINES ZUGANGSSCHACHT
JUNCTION DEVICE OF A PIPE AND AN ACCESS POINT

(30) Priorité: 28.09.2017 FR 1771026
(43) Date de publication de la demande: 03.04.2019
(73) Titulaire: Canalisations Regards Prefabrication, 19360 Malemort-sur-Correze (FR)
(72) Inventeur: BESSIERES, Jean-Marc, 19100 BRIVE-LA-GAILLARDE (FR)
(74) Mandataire: Aquinov

(56) Documents cités:
- EP-A1- 0 937 938
- DE-A1- 19 817 638
- FR-A1- 2 535 005
- FR-A1- 2 701 527
- US-A- 3 048 415

## Description

La présente invention concerne un dispositif de jonction d'un tuyau et d'un regard.

Dans le secteur du Bâtiment et Travaux Publics, BTP, et plus précisément dans le secteur des réseaux, il est couramment utilisé des tuyaux connectés à des regards pour réaliser lesdits réseaux.

On entend par "tuyau" pour la suite de la description toute canalisation lisse, annelée, métallique ou en matière plastique.

Un des problèmes est notamment la nécessité de les lier ensemble, de manière étanche et résistante mécaniquement sachant que ces tuyaux/regards sont généralement enterrés et/ou peu accessibles.

En effet, les canalisations souterraines sont non seulement enterrées mais également soumises à des efforts importants dus à la pression des terres, aux mouvements desdites terres, aux vibrations sous chaussée et aux efforts hydrauliques, mécaniques, pouvant s'exercer à l'intérieur des tuyaux et des regards, y compris les éventuelles dilatations. Au-delà du dimensionnement des tuyaux et des regards, il est nécessaire d'assurer une jonction qualitative et durable entre les tuyaux et les regards. La jonction est encore un peu plus complexe à assurer lorsque le regard est cylindrique car l'ouverture d'accès est curviligne. La forme cylindrique des regards est souvent conservée du fait de la meilleure résistance mécanique de la forme courbe d'une part et l'homogénéité de ladite résistance d'autre part.

Il réside, dans ce secteur industriel, une problématique non négligeable de dimensionnement et de standardisation des dimensions des produits de différentes marques qu'il faut néanmoins assembler en respectant le caractère pérenne de cet assemblage. En effet, les dimensions variées des regards et des tuyaux qui ne sont pas tous standardisées et/ou normées, peuvent poser des difficultés de compatibilité entre les différents fabricants de tuyaux. La multiplicité des dimensions de regards et de tuyaux impose alors la nécessité de disposer d'un stock important de produits pour permettre la fourniture rapide des tuyaux et regards de dimensions variées. Or, sur les chantiers, les stocks sont souvent limités par manque de place et aussi tout simplement pour des raisons économiques.

De plus, la précision sur chantier est plus difficile à respecter et la simplicité de pose est recherchée pour des raisons évidentes de gain de temps et donc de diminution des coûts.

Il existe aussi des joints disposés sur la partie regard à travers lesquels sont introduits les tuyaux, de façon à assurer une étanchéité entre lesdits tuyaux et le regard sur lequel ils sont montés.

Il conviendrait de disposer de regards compatibles avec des diamètres de tuyaux variés.

La présente invention propose un dispositif de jonction, permettant une jonction étanche entre un regard et un tuyau.

Le document FR 2701527 A1 divulgue une ouverture d'un regard recevant un tuyau, et un joint d'étanchéité. Dans ce document, l'ouverture est tronconique à faible pente et le joint d'étanchéité est un joint périphérique formant un ensemble de lèvres dont le profile forme une frange de taille croissante depuis l'avant du joint, suivi d'un bourrelet à l'arrière.

L'invention est un dispositif de jonction selon la revendication 1.

La présente invention est maintenant décrite suivant un mode de réalisation principal, sans que celui-ci soit limitatif, ceci en regard des dessins associés sur lesquels les différentes figures représentent:
- Figure 1: une vue en perspective d'un regard,
- Figure 2: une vue en coupe du regard de la figure 1,
- Figure 3: une vue en coupe d'un joint d'étanchéité, applicable au dispositif de jonction selon l'invention, entre un tuyau, en l'occurrence annelé, et un regard,
- Figure 4: une vue latérale d'un joint d'étanchéité mis en place sur un tuyau annelé,
- Figure 5: une vue en coupe d'un regard recevant un tuyaux annelé muni du dispositif de jonction selon la présente invention.

La présente invention concerne un dispositif de jonction en un regard 10 et un tuyau 12.

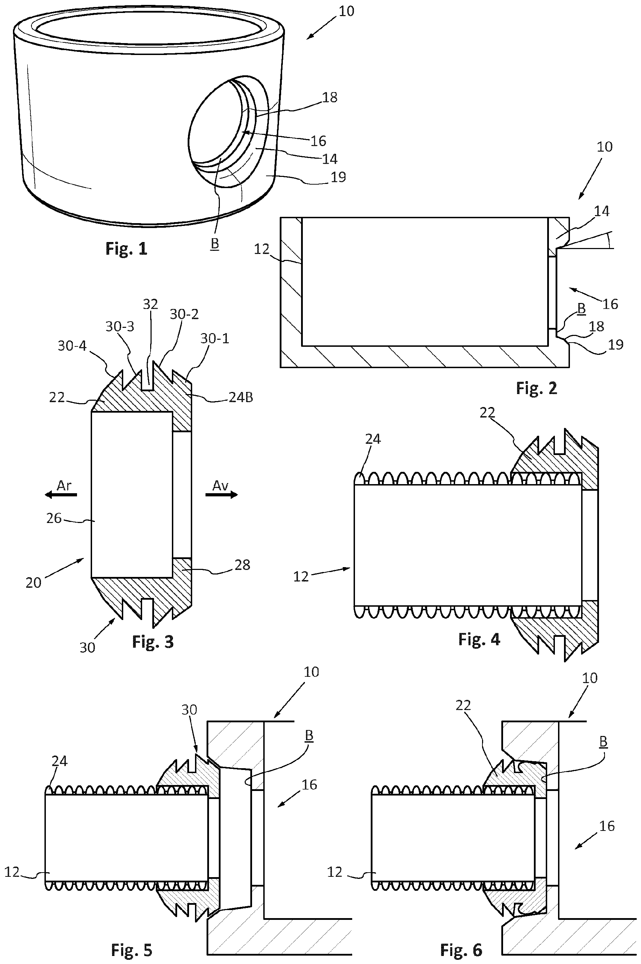

On entend pour la suite de la description par tuyau 12 tout tube rigide radialement, lisse ou annelé pour être conformable mais dans tous les cas rigide radialement. Le tuyau 12 est ici représenté annelé. Le regard 10 est représenté sur les figures 1 et 2. Un tel regard 10 est généralement réalisé en béton. Le regard 10 est muni d'un corps cylindrique 14, généralement ouvert en partie supérieure et généralement fermé en partie inférieure ainsi que d'une ouverture 16. Le regard 10 est destiné à recevoir un tuyau 12 via l'ouverture 16 placée dans le corps cylindrique 14. Le dispositif de jonction selon la présente invention comprend une ouverture dans le regard 10, en l'occurrence une ouverture tronconique 18, rectiligne et des moyens d'étanchéité 20 rapportés sur ledit tuyau 12 et aptes à coopérer avec ladite ouverture tronconique 18.

De façon connue, il est prévu une partie évasée 19 d'introduction, ménagée en amont de l'ouverture tronconique 18. La partie évasée 19 et l'ouverture tronconique 18 sont placées autour de l'ouverture 16, ladite ouverture 16 étant généralement obstruée lors de fabrication du regard 10, puis réalisée une fois le regard mis en place, en cassant l'intérieur de la prédécoupe circulaire prévue pour réaliser ladite ouverture 16. En aval de l'ouverture tronconique 18, soit côté intérieur par rapport à ladite ouverture tronconique, il est prévu une butée périphérique B. Les moyens d'étanchéité 20 sont réalisés par un joint d'étanchéité 22. Le joint d'étanchéité 22 est représenté sur la figure 3 avant montage et est représenté mis en place sur un tuyau 12 sur la figure 4. Le joint d'étanchéité 22 est réalisé en un matériau déformable du type élastomère.

Le tuyau 12 retenu pour la présente description, ceci de façon non limitative, est un tuyau annelé, généralement en matière plastique de type PEHD. Ce type de tuyau est celui qui est le plus complexe sur lequel il est nécessaire de réaliser une étanchéité. Le tuyau 12 comporte des anneaux 24, répartis de manière régulière, et s'étend suivant son axe longitudinal sur lequel les sens sont définis par les flèches avant Av et arrière Ar.

Le joint d'étanchéité 22 est un joint périphérique muni d'une partie réceptrice 26, d'une butée circulaire intérieure 28 et d'au moins deux lèvres extérieures 30, en l'occurrence quatre lèvres extérieures 30-1, 30-2, 30-3, 30-4 et forment ensemble un élément monolithique.

La partie réceptrice 26 est une partie tubulaire lisse dont la longueur est au moins égale à l'épaisseur de trois lèvres extérieures 30, considérées suivant l'axe X du tuyau 12 et du joint d'étanchéité 22.

Les quatre lèvres extérieures 30-1 à 30-4 présentent des rebords extérieurs tronconiques, bien visibles sur la figure 3. Chacune des deux lèvres 30-1 et 30-2 d'extrémité avant ont un diamètre extérieur qui diminue suivant l'axe Av et ont un diamètre différent. En effet, l'une 30-2 des au moins deux lèvres 30-1, 30-2 a un diamètre extérieur maximal supérieur à celui de la au moins une autre lèvre 30-1. Depuis l'avant du joint d'étanchéité 22, la deuxième lèvre 30-2 a un diamètre extérieur plus important que celui de la première lèvre 30-1. Les deux lèvres arrière 30-3 et 30-4 du joint d'étanchéité 22 sont également de forme tronconique mais la pente est orientée dans le sens inverse, c'est-à-dire que chaque lèvre a un diamètre extérieur qui diminue suivant l'axe Ar.

Le diamètre extérieur de ces troisième 30-3 et quatrième 30-4 lèvres est, dans le mode de réalisation retenu, de diamètre sensiblement identique à celui de la première lèvre 30-1.

Sur l'extérieur du joint d'étanchéité 22, il est également agencé un espace 32 entre les deux lèvres 30-1 et 30-2 et les deux lèvres 30-3 et 30-4, plus précisément entre la lèvre 30-2 et la lèvre 30-3.

La butée circulaire intérieure 28 est formée par le prolongement radial de la lèvre 30-1 placée à l'extrémité avant du joint d'étanchéité 22. Ainsi, le diamètre intérieur du joint d'étanchéité 22 au niveau de la butée intérieur 28 est inférieur au diamètre dudit joint d'étanchéité 22 au niveau de la partie réceptrice 26.

Le regard 10 est un regard en béton réalisé par un corps cylindrique 14 vertical et d'une ouverture tronconique 18 de branchement d'axe horizontal, précédée d'une partie évasée de façon connue. Comme visible sur les figures 1 et 2, l'ouverture tronconique 18 présente un diamètre qui diminue depuis la fin de la partie évasée, de la paroi extérieure du corps 14 du regard 10 vers la paroi intérieure du corps 14 du regard 10. Cette diminution dont la pente est reportée sur la figure 2, est de l'ordre de 1 à 9%.

La partie réceptrice 26 du joint d'étanchéité 22 est emboitée autour des anneaux 24 du tuyau 12 jusqu'à que l'extrémité dudit tuyau 12 soit en contact avec la butée circulaire intérieure 28 du joint d'étanchéité 22, comme représenté sur la figure 4. Tout effort de poussée exercé sur le tuyau 12 sera ainsi transféré sur cette butée circulaire 28.

Une fois le joint d'étanchéité 22 correctement positionné autour de l'extrémité du tuyau 12, l'ensemble constitué par le tuyau 12 et le joint d'étanchéité 22 peut être emboîté dans l'ouverture tronconique 18 du regard 10.

Le joint d'étanchéité 22 assure alors une liaison étanche entre le tuyau 12 et l'ouverture tronconique 18 du regard 10, voir figures 5 et 6.

En effet, la souplesse des lèvres 30 du joint d'étanchéité 22, et plus particulièrement les lèvres avant 30-1 et 30-2 permettent d'épouser la forme de l'ouverture tronconique à faible pente, comme dans le cas présent. Après passage et centrage à travers la partie évasée 19 en amont, la première lèvre 30-1 de plus petit diamètre assure une première étanchéité et un premier contact entre le joint d'étanchéité 22 et l'ouverture tronconique 18.

La deuxième lèvre 30-2, ayant un diamètre plus important que les autres lèvres 30 et un diamètre extérieur plus grand que le diamètre intérieur de l'ouverture tronconique 18 qui la reçoit est alors comprimée et déformée. La déformation de la lèvre 30-2, visible sur la figure 6, montre la modification de géométrie engendrée par l'introduction du tuyau 12 et du joint d'étanchéité 22 dans l'ouverture tronconique 18. L'extrémité extérieure du joint d'étanchéité 22 est contrainte vers l'arrière et l'espace 32 est partiellement comblé par la compression et la déformation de la lèvre 30-2. La compression de la lèvre 30-2 permet d'assurer un contact renforcé pour assurer une jonction à forte étanchéité entre le joint 22 et l'ouverture tronconique 18, donc entre le tuyau 12 et le regard 10.

De plus, un tel joint permet d'assurer l'étanchéité entre un tuyau et une ouverture d'un regard qui n'ont pas des diamètres, respectivement extérieur et intérieur, parfaitement compatibles, à quelques millimètres prêts.

En plus de la meilleure qualité d'étanchéité obtenue, l'utilisation d'un tel joint d'étanchéité 22 à lèvres confère une meilleure capacité d'adaptation sur les chantiers, évitant alors d'avoir un stock trop important de tuyaux de différents diamètres et évitant de faire face à des problèmes de compatibilité entre les différentes marques et modèles de tuyau 12.

On note que, pour une meilleure liaison mécanique, il est préférable d'introduire au moins une des deux lèvres 30-3, 30-4 de façon à induire un arc-boutement de ces lèvres lors d'une traction dans le sens de la flèche Ar, favorisant la retenue mécanique du tuyau dans l'ouverture.

L'étanchéité est donc réalisée de façon qualitative et la retenue mécanique est excellente, avec un rattrapage possible des jeux.

On note aussi que les regards peuvent être manipulés aisément avec des moyens de levage sans risque de dégradation du joint puisque, dans la présente invention, ledit joint n'est plus porté par le regard.

De plus, en fonction des diamètres de tuyaux, les joints sont choisis et il est plus facile de choisir un joint qui convienne sachant qu'un stock de différents joints n'est par contre pas un problème car le volume occupé est réduit.

En cas de dégradation du joint pour une quelconque raison, notamment une erreur de manipulation, une erreur de tuyau, le joint du regard, qui peut être délicat à remplacer voire non remplaçable, qui peut être détérioré au démontage, est changé de façon extrêmement aisée dans le cas de la présente invention.

Un lubrifiant peut être prévu pour faciliter l'emboîtement initial.

## Revendications

1. Dispositif de jonction comprenant un tuyau (12) avec au moins une extrémité, un regard (10) comprenant un corps (14) avec au moins une ouverture (16), le regard étant destiné à recevoir ledit tuyau, et des moyens d'étanchéité (20) interposés entre l'extrémité dudit tuyau et ladite ouverture (16), dans lequel l'ouverture (16) est tronconique à faible pente et le joint d'étanchéité (22) est un joint périphérique porté par l'extrémité tuyau ; ledit joint comprenant depuis l'avant du joint au moins des première et deuxième lèvres (30-1, 30-2) d'extrémité avant ayant chacune une forme tronconique avec un diamètre extérieur qui diminue vers l'avant ; dans lequel la deuxième lèvre extérieure (30-2) d'extrémité avant a un diamètre extérieur maximal supérieur à celui de la première lèvre (30-1) d'extrémité avant; ledit joint comprenant au moins une troisième lèvre (30-3, 30-4) de forme tronconique avec un diamètre extérieur qui diminue vers l'arrière, le diamètre extérieur maximal de cette troisième lèvre étant sensiblement identique à celui de la première lèvre (30-1) d'extrémité avant.

2. Dispositif de jonction selon la revendication 1, dans lequel le joint d'étanchéité (22) comporte une partie réceptrice (26) et une butée circulaire intérieure (28).

3. Dispositif de jonction selon l'une des revendications précédentes pourvu d' un espace (30) derrière les lèvres (30-1, 30-2) d'extrémité avant.

4. Dispositif de jonction selon l'une quelconque des revendications précédentes, **caractérisé en ce que** l'ouverture (16) tronconique présente une pente comprise entre 1% et 9%.

5. Dispositif de jonction selon l'une des revendications précédentes, dans lequel l'ouverture tronconique (18) est précédée à l'amont d'une partie évasée 19 et est succédée en aval d'une butée B.

6. Dispositif de jonction selon l'une quelconque des revendications précédentes, dans lequel le joint d'étanchéité (22) est en matériau déformable.

## Patentansprüche

1. Anschlussvorrichtung, umfassend ein Rohr (12) mit wenigstens einem Ende, einen Schacht (10), der einen Körper (14) mit wenigstens einer Öffnung (16) umfasst, wobei der Schacht dazu bestimmt ist, das Rohr aufzunehmen, und Abdichtungsmittel (20), die zwischen dem Ende des Rohres und der Öffnung (16) angeordnet sind, wobei die Öffnung (16) kegelförmig mit einer geringen Neigung ist und die Flachdichtung (22) eine vom Ende des Rohres getragene Umfangsdichtung ist; wobei die Dichtung von der Vorderseite der Dichtung aus wenigstens eine erste und eine zweite Lippe (30-1, 30-2) des vorderen Endes umfasst, die jeweils eine kegelförmige Form mit einem Außendurchmesser haben, der zu der Vorderseite hin kleiner wird; wobei die zweite äußere Lippe (30-2) des vorderen Endes einen maximalen Außendurchmesser hat, der größer als der der ersten Lippe (30-1) des vorderen Endes ist; wobei die Dichtung wenigstens eine dritte Lippe (30-3, 30-4) mit kegelförmiger Form mit einem Außendurchmesser umfasst, der zu der Rückseite hin kleiner wird, wobei der maximale Außendurchmesser dieser dritten Lippe im Wesentlichen identisch mit dem der ersten Lippe (30-1) des vorderen Endes ist.

2. Anschlussvorrichtung nach Anspruch 1, wobei die Flachdichtung (22) einen Aufnahmeabschnitt (26) und einen inneren kreisförmigen Anschlag (28) enthält.

3. Anschlussvorrichtung nach einem der vorhergehenden Ansprüche, die mit einem Zwischenraum (30) hinter den Lippen (30-1, 30-2) des vorderen Endes versehen ist.

4. Anschlussvorrichtung nach einem der vorhergehenden Ansprüche, **dadurch gekennzeichnet, dass** die kegelförmige Öffnung (16) eine Neigung von 1 % bis 9 % aufweist.

5. Anschlussvorrichtung nach einem der vorhergehenden Ansprüche, wobei der kegelförmigen Öffnung (18) ein aufgeweitetes Teil 19 vorgelagert und ihr ein Anschlag B nachgelagert ist.

6. Anschlussvorrichtung nach einem der vorhergehenden Ansprüche, wobei die Flachdichtung (22) aus einem verformbaren Material besteht.

## Claims

1. Junction device, comprising a pipe (12) that has at least one end, a manhole (10) comprising a body (14) that has at least one opening (16), the manhole being intended to receive said pipe, and sealing means (20) positioned between the end of said pipe and said opening (16), wherein the opening (16) is frustoconical with a low slope and the seal (22) is a peripheral seal carried by the end of the pipe; said seal comprising, from the front of the seal, at least first and second front end lips (30-1, 30-2) each having a frustoconical shape with an outer diameter which decreases toward the front; wherein the second outer front end lip (30-2) has a maximum outer diameter greater than that of the first front end lip (30-1); said seal comprising at least a third lip (30-3, 30-4) that is frustoconical and has an outer diameter which decreases toward the rear, the maximum outer diameter of this third lip being substantially identical to that of the first front end lip (30 -1).

2. Junction device according to claim 1, wherein the seal (22) has a receiving part (26) and a circular inner stop (28).

3. Junction device according to either of the preceding claims, provided with a space (30) behind the front end lips (30-1, 30-2).

4. Junction device according to any of the preceding claims, **characterized in that** the frustoconical opening (16) has a slope of between 1% and 9%.

5. Junction device according to any of the preceding claims, wherein the frustoconical opening (18) is preceded upstream by a flared part 19 and succeeded downstream by a stop B.

6. Junction device according to any of the preceding claims, wherein the seal (22) consists of deformable material.
